# FASCICULE DE BREVET EUROPEEN

(11) **EP 1 238 363 B1**
(45) Date de publication et mention de la délivrance du brevet: **30.07.2003**
(21) Numéro de dépôt: 00985438.1
(22) Date de dépôt: 14.12.2000
(51) Int. Cl.: G06K 7/00

(54) **DISPOSITIF DE LECTURE DE TRANSPONDEUR**
TRANSPONDER-LESEGERÄT
TRANSPONDER READING DEVICE

(30) Priorité: 15.12.1999 FR 9915805
(43) Date de publication de la demande: 11.09.2002
(73) Titulaire: Circe, 06610 La Gaude (FR)
(72) Inventeur: PAGNOL, Frédéric, F-06610 La Gaude (FR); NEVEUX, Antoine, MC-98000 Monaco (MC)
(74) Mandataire: Tanty, François
(86) Numéro de dépôt international: FR0003523
(87) Numéro de publication internationale: WO01045030

(56) Documents cités:
- EP-A- 0 892 493
- GB-A- 2 333 665

## Description

La présente invention concerne d'une manière générale l'identification d'objets ou de personnes au moyen de transpondeurs grâce à un dispositif de lecture permettant de lire une information mémorisée dans les transpondeurs, voire d'échanger des informations avec ces derniers.

L'invention concerne plus particulièrement un dispositif de lecture du type comportant un étage de puissance et une antenne de lecture permettant de générer un champ électromagnétique d'excitation d'au moins un transpondeur situé dans le champ de l'antenne, ce transpondeur comportant une antenne de réception et des moyens de commutation associés lui permettant de modifier l'état de l'antenne de réception et de transmettre ainsi des informations au dispositif de lecture, par modification du couplage entre l'antenne de lecture et l'antenne de réception.

Chaque transpondeur reçoit l'énergie électrique nécessaire à son fonctionnement de l'antenne de lecture.

Il est difficile d'extraire du signal de l'antenne de lecture un signal utile représentatif de l'information provenant du transpondeur, du fait que les modifications de couplage induites par les changements de l'état de l'antenne de réception sont extrêmement faibles et proches des bruits thermiques et de grenaille dans le cas d'un tag de petite taille situé à grande distance de l'antenne:

Ces difficultés sont accrues par le fait que la réglementation oblige à ne pas dépasser une puissance d'émission donnée dans la bande de fréquence utilisée et à ne pas générer d'harmoniques dans d'autres bandes de fréquence.

On connaît par la demande GB 2 333 665 un dispositif de lecture visant à réduire l'amplitude de la porteuse pour faciliter la détection. La revendication 1 a été délimitée par rapport à cette demande.

Ce dispositif comporte des filtres passe-haut et passe-bas pour générer deux signaux, dont un de référence. Ce dispositif ne permet pas d'annuler les bruits dus aux composants électroniques de l'étage de puissance.

L'invention a pour objet un nouveau dispositif de lecture capable de respecter la réglementation tout en présentant une sensibilité suffisante pour lire les informations transmises par un transpondeur placé dans le champ de l'antenne de lecture.

Le dispositif de lecture selon l'invention se caractérise par le fait qu'il comporte des moyens de détection agencés pour réduire dans le signal de l'antenne le bruit ou les fluctuations dus aux composants électroniques de l'étage de puissance et générer un signal utile à partir de l'évolution du signal de l'antenne de lecture par rapport à un signal de référence, ce signal de référence étant représentatif du signal de l'antenne de lecture lorsque l'antenne de réception du transpondeur est dans un état prédéterminé, le signal utile étant représentatif des changements d'état de l'antenne de réception.

Grâce à l'invention, il est possible de par l'utilisation d'un signal de référence de détecter des variations du couplage de l'ordre de 10⁻⁶ entre l'antenne de lecture et l'antenne de réception.

Dans une première mise en oeuvre de l'invention, le dispositif de lecture comporte des moyens de commutation agencés pour alimenter l'antenne de lecture en mode pulsé et les moyens de détection comportent des moyens de traitement agencés pour effectuer une démodulation d'amortissement du signal de l'antenne de lecture après chaque pulse.

L'invention tire alors parti du fait que les oscillations de l'antenne après chaque pulse s'amortissent avec une manière qui dépend du couplage entre l'antenne de lecture et l'antenne de réception.

Toute modification de ce couplage entraîne une modification de l'amortissement qui est détectée par le dispositif de lecture pour extraire l'information transmise par le transpondeur.

Cette information est relativement facile à extraire en raison du fait qu'après chaque pulse l'antenne de lecture oscille librement, de sorte que son signal n'est pas pollué par le bruit des composants électroniques de l'étage de puissance ayant servi à exciter l'antenne.

Avantageusement, les moyens de traitement précités comportent un détecteur crête pour conserver l'amplitude de crête du signal de l'antenne de lecture pendant une pseudo-période prédéterminée, par exemple la troisième pseudo-période, cette pseudo-période sélectionnée pour la mesure étant de préférence celle qui est la plus favorable d'un point de vue signal/bruit, soit celle où l'amplitude de crête est voisine de 1/e de l'amplitude initiale.

Dans une réalisation particulière des moyens de traitement, ceux-ci comportent des moyens d'écrêtage pour écrêter le signal de l'antenne de lecture pendant une durée prédéterminée précédant la pseudo-période sélectionnée pour la mesure.

Dans une autre mise en oeuvre de l'invention, l'antenne de lecture est excitée par un signal à faible taux d'harmoniques, de préférence issu d'un amplificateur à commutation de classe E et le dispositif de lecture comporte des moyens de traitement agencés pour effectuer une démodulation d'impédance.

Dans une réalisation particulière, le dispositif de lecture comporte un coupleur directionnel agencé de telle sorte qu'une modification du couplage entre l'antenne de lecture et l'antenne de réception donne naissance à un signal utile représentatif du désaccord de l'antenne de lecture induit par les changements d'état de l'antenne de réception.

Toujours dans une réalisation particulière, le signal de référence est obtenu au moyen d'un bras de compensation dont l'impédance est égale, à un facteur près connu, à celle de l'antenne de lecture lorsque l'antenne de réception est dans un état prédéterminé.

Avantageusement, le dispositif de lecture comporte un tore à trois enroulements, dont un premier enroulement relié en série avec le bras de compensation, un deuxième enroulement relié en série avec l'antenne de lecture et monté en opposition de phase avec le premier enroulement, de telle sorte que le flux dans le tore soit nul quand l'impédance de l'antenne est égale, à un facteur connu près, à celle du bras de compensation, et un troisième enroulement permettant de détecter une variation de flux dans le tore.

Dans une réalisation particulière, le bras de compensation comporte des composants variables commandés de manière à annuler le flux dans le tore dû aux variations lentes de l'impédance de l'antenne de lecture.

Dans une autre réalisation particulière, le bras de compensation comporte des composants de valeurs fixes, et le tore comporte un quatrième enroulement alimenté en courant de manière à annuler le flux dans le tore dû aux variations lentes de l'antenne de lecture.

Le fait d'exciter l'antenne de lecture avec un signal présentant un faible taux d'harmoniques a pour avantage de permettre l'alimentation de l'antenne de lecture avec un courant relativement important sans craindre de polluer le spectre des fréquences radio.

De manière générale, l'antenne de lecture est avantageusement scindée en au moins deux enroulements reliés en série par un condensateur d'accord disposé à l'intérieur d'un blindage.

Ce blindage peut être ouvert à l'une au moins de ses extrémités axiales, afin de permettre le passage dans l'antenne de lecture des articles munis des transpondeurs.

Le blindage est avantageusement fendu pour ne pas dissiper de courants induits.

Le fait de scinder l'antenne de lecture en au moins deux enroulements permet de positionner les bornes de ces enroulements, qui sont soumises à des surtensions, à l'intérieur du blindage, ce qui rend l'antenne plus sûre et permet également d'en réduire la sensibilité aux parasites, aux effets des potentiels statiques, encore appelés effets de main, et à l'humidité,et d'augmenter le facteur de qualité résultant.

En outre, certains composants de l'antenne de lecture sont alors soumis à des tensions plus faibles et vieillissent mieux.

Dans une réalisation particulière, l'antenne de lecture comporte un premier ensemble d'enroulements disposé à l'intérieur du champ produit par un deuxième ensemble d'enroulements, ces enroulements étant reliés entre eux de manière à constituer une antenne quadripolaire, à l'extérieur de laquelle le champ magnétique lointain décroît en 1/d⁵.

Grâce à cette décroissance rapide du champ magnétique lointain, on peut disposer dans une même enceinte plusieurs dispositifs de lecture sans que cela pose des problèmes d'interférence entre les antennes de lecture.

Dans une réalisation particulière, la fréquence sur laquelle l'antenne de lecture est accordée est comprise entre 100 et 150 kHz, notamment 119-135 kHz, ce qui permet de conférer à l'antenne une portée relativement importante.

Dans une réalisation particulière, la fréquence avec laquelle l'antenne de réception est commutée est au moins 16 fois plus faible que la fréquence sur laquelle l'antenne de lecture est accordée.

Lorsque l'antenne de lecture est agencée pour recevoir un container contenant une pluralité d'articles munis chacun d'un transpondeur, on utilise de préférence le dispositif de lecture à démodulation d'impédance dont l'antenne de lecture est alimentée par un signal à faible taux d'harmoniques, issu de préférence d'un amplificateur à commutation de classe E.

La puissance d'émission de l'antenne de lecture peut être dans ce cas relativement importante, de sorte que cette dernière peut couvrir un important volume de détection.

Dans une autre réalisation particulière, on cherche plutôt à avoir une antenne de lecture présentant un faible encombrement et un faible coût.

Dans ce cas, on utilise de préférence le dispositif de lecture à démodulation d'amortissement.

Dans tous les cas, le dispositif de lecture comporte avantageusement un transpondeur étalon assujetti à l'antenne de lecture, ce transpondeur étalon étant actif lors de phases de test du dispositif de lecture et pouvant être placé dans un mode silencieux lorsque lesdites phases de test sont terminées.

Lorsque les transpondeurs utilisés sont du type à lecture et écriture, le dispositif de lecture comporte avantageusement des moyens de commutation permettant de moduler l'alimentation de l'antenne de lecture, de manière à transmettre des informations aux transpondeurs placés dans le champ de l'antenne.

De préférence, dans le cas d'une modulation en tout ou rien, le dispositif de lecture comporte un circuit d'amortissement des oscillations de l'antenne de lecture, comprenant des moyens de commutation pour relier un enroulement placé dans le champ de l'antenne de lecture ou un élément réactif de l'antenne à une charge dissipative, lorsqu'il est nécessaire d'amortir rapidement les oscillations de l'antenne.

L'invention a encore pour objet un ensemble de dispositifs tels que définis plus haut.

Dans ce cas, on synchronise avantageusement les horloges des dispositifs.

De plus, on les commande de préférence de telle sorte qu'aucun d'eux ne fonctionne en mode d'écriture quand un autre fonctionne en mode de lecture.

D'autres caractéristiques et avantages de la présente invention ressortiront à la lecture de la description détaillée qui va suivre, d'exemples de mise en oeuvre non limitatifs, et à l'examen du dessin annexé sur lequel :
- la figure 1 est un schéma d'un dispositif de lecture conforme à un premier exemple de mise en oeuvre de l'invention,
- la figure 2 représente une variante du dispositif de la figure 1,
- la figure 3 est un schéma de l'antenne,
- la figure 4 est un schéma d'une variante de l'antenne,
- la figure 5 représente de manière schématique une antenne quadripolaire,
- la figure 6 est un schéma avec coupleur directionnel,
- la figure 7 représente l'évolution du signal de l'antenne de lecture suite à une impulsion,
- la figure 8 représente le signal de l'antenne lorsque celle-ci est excitée en mode pulsé,
- la figure 9 est un schéma d'un dispositif de lecture conforme à un deuxième exemple de mise en oeuvre de l'invention, et
- la figure 10 représente un dispositif d'amortissement des oscillations de l'antenne de lecture.

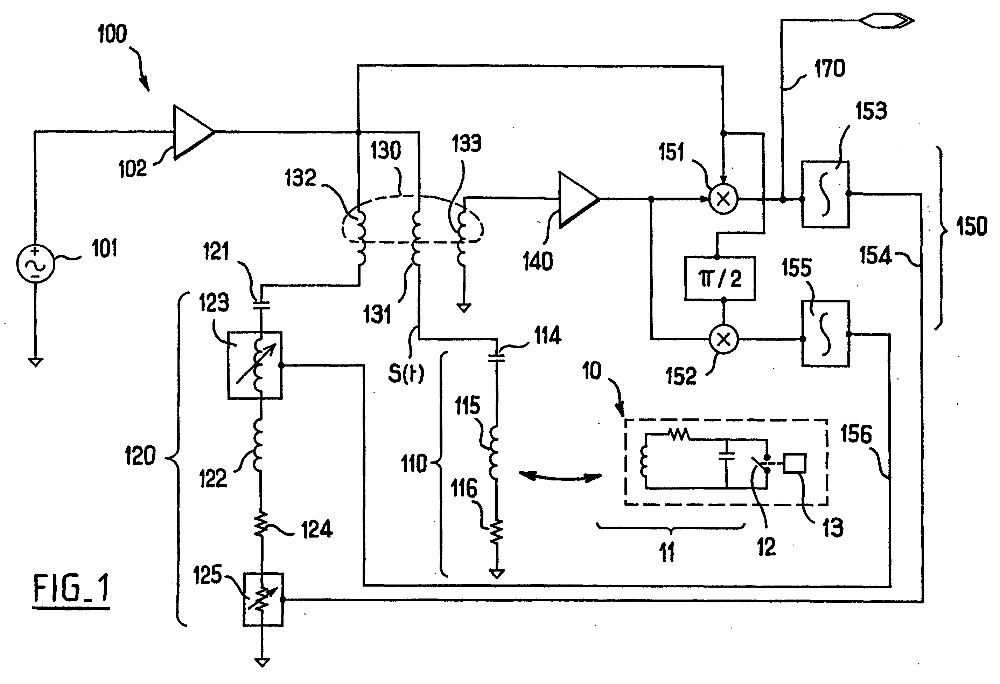

Le dispositif de lecture 100 représenté sur la figure 1 est destiné à recevoir des informations provenant d'un transpondeur 10 d'un type bien connu en soi, comportant une antenne de réception 11 et des moyens de commutation 12 permettant de faire passer l'antenne de réception d'un premier état dans lequel elle absorbe une énergie relativement faible à un deuxième état dans lequel elle absorbe une énergie plus grande.

La suite des changements d'état de l'antenne de réception 11 est déterminée par des moyens de commande 13 internes au transpondeur en fonction de l'information à transmettre.

Le transpondeur 10 est de petite taille, et peut être encapsulé dans une pastille en matière plastique ayant un diamètre de l'ordre du cm.

On pourra utilement se reporter à la demande de brevet européen EP 847 023 et à la demande de brevet FR 2 772 164 qui se réfèrent à l'emploi de tels transpondeurs.

Le transpondeur 10 transmet des informations avec un code particulier, par exemple un code Manchester connu en soi.

Le dispositif de lecture 100 comporte un générateur 101 de signal de fréquence égale à 134,2 kHz dans l'exemple décrit, relié à un étage de puissance 102 fonctionnant en classe E.

On peut également travailler à 125 kHz.

Les amplificateurs à commutation de classe E sont décrits notamment dans la revue électronique applications n° 17, page 25 et suivantes.

Le signal issu de l'étage de puissance 102 présente un faible taux d'harmoniques.

Le signal amplifié est envoyé à une antenne de lecture 110 accordée sur la fréquence du générateur 101 et comprenant en série un condensateur d'accord 114, une inductance 115 et une résistance 116.

La fréquence avec laquelle l'antenne de réception du transpondeur 10 change d'état est par exemple inférieure à 16 fois, 32 fois ou 64 fois la fréquence sur laquelle l'antenne de lecture est accordée.

Le signal amplifié issu de l'étage de puissance 102 est envoyé à un bras de compensation 120.

Ce bras de compensation est constitué dans l'exemple décrit par l'association en série d'un condensateur 121, d'une inductance fixe 122, d'une inductance variable 123, d'une résistance fixe 124 et d'une résistance variable 125.

L'impédance du bras de compensation 120 est égale à un multiple de celle de l'antenne de lecture 110 en l'absence de transmission d'informations par le transpondeur 10.

Le bras de compensation 120 est accordé sur la même fréquence que l'antenne de lecture 110 et présente sensiblement le même facteur de qualité Q.

L'antenne de lecture 110 est reliée à l'étage de puissance 102 par l'intermédiaire d'un enroulement 131 bobiné sur un tore 130.

Le bras de compensation 120 est relié à l'étage de puissance 102 par l'intermédiaire d'un enroulement 132 bobiné sur le même tore 130 que l'enroulement 131, mais en opposition de phase, de telle sorte que le flux dans le tore 130 soit nul lorsque l'impédance du bras de compensation est égale, à un facteur k près compris par exemple entre 2 et 10, à celle de l'antenne de lecture 110.

Dans l'exemple de réalisation décrit, on fait en sorte que le courant dans le bras de compensation 120 soit, lorsque le flux dans le tore 130 est nul, égal à un sous-multiple du courant dans l'antenne de lecture 110, de manière à limiter les pertes de puissance par dissipation dans le bras de compensation 120.

La résistance 124 est ainsi choisie de manière à ce que le courant dans le bras de compensation 120 soit k fois plus faible que celui dans l'antenne de lecture 110 lorsque le flux dans le tore 130 est nul.

k est égal au rapport du nombre de spires de l'enroulement 132 sur le nombre de spires de l'enroulement 131, de manière à obtenir un flux nul dans le tore 130 lorsque le courant dans l'antenne de lecture 110 est égal à k fois celui dans le bras de compensation 120.

Un troisième enroulement 133 est bobiné sur le tore 130 pour délivrer un courant représentatif du flux dans celui-ci.

Lorsque le couplage entre l'antenne de lecture 110 et l'antenne de réception 11 du transpondeur 10 est modifié par la fermeture des moyens de commutation 12, l'impédance de l'antenne de lecture 110 change et un flux non nul apparaît dans le tore 130, ce qui est détecté par l'enroulement 133.

Le tore 130 effectue la soustraction magnétique entre le courant dans l'antenne de lecture 110 et celui dans le bras de compensation 120, après multiplication d'un facteur k.

Cette soustraction permet de supprimer le bruit des composants électroniques du générateur 101 et de l'étage de puissance 102 dans le signal S(t) de l'antenne de lecture.

Le bras de compensation 120 sert ainsi à générer un signal de référence qui permet d'éliminer du signal de l'antenne S(t) le bruit dû aux composants électroniques servant à générer la porteuse.

L'enroulement 133 est relié à un amplificateur 140 lui-même connecté à des moyens de traitement 150, lesquels comprennent un multiplicateur 151 pour effectuer une démodulation synchrone du signal délivré par l'amplificateur 140 et un multiplicateur 152 pour effectuer une démodulation synchrone du signal délivré par l'amplificateur 140 après déphasage de π/2 de la porteuse.

Le signal 170 démodulé en 151 est représentatif de l'information transmise par le transpondeur et peut être dirigé vers un microprocesseur ou tout autre moyen de traitement du signal capable de décoder cette information.

Le signal 170 est intégré en 153 pour constituer un signal d'erreur 154 qui est utilisé pour commander la résistance variable 125.

Le signal démodulé en 152 est intégré en 155 pour constituer un signal d'erreur en quadrature 156 qui est utilisé pour commander l'inductance variable 123.

Dans une variante non illustrée, le bras de compensation ne comporte qu'une résistance asservie à une valeur k fois plus grande que l'impédance réelle de l'antenne de lecture à la fréquence d'accord.

Toutefois, dans cette variante, le bras de compensation ne peut servir de référence exacte qu'à la fréquence de résonance et non sur toute la bande passante déterminée par le facteur de qualité Q et les filtres des étages de détection, de sorte que le bruit de l'amplificateur 102 n'est pas éliminé en totalité.

Le bras de compensation 120 comporte dans l'exemple illustré l'inductance variable 123 en plus de la résistance variable 125, de façon à être davantage représentatif de l'antenne de lecture.

La résistance 125 du bras de compensation est modifiée de manière à annuler le signal d'erreur 154 et la valeur de l'inductance variable 123 est modifiée de manière à annuler le signal d'erreur en quadrature 156.

On corrige ainsi les variations lentes de l'impédance de l'antenne de lecture 110, dues par exemple à la température ou à la nature des objets placés dans le champ de l'antenne.

Cet asservissement permet de maintenir le flux nul dans le tore 130.

La résistance variable 125 est avantageusement une résistance LDR dont la valeur varie en fonction de l'éclairement, cette résistance étant commandée par une source de lumière telle qu'une LED par exemple, recevant le signal d'erreur 154.

L'inductance variable 123 est avantageusement constituée par le secondaire d'un transformateur dont le primaire est chargé par une résistance LDR, commandée par une source de lumière telle qu'une LED par exemple, recevant le signal d'erreur en quadrature 156.

Dans l'exemple considéré, le transformateur utilisé comporte au primaire 14 spires et au secondaire 16 spires, ces spires étant bobinées sur un tore de 1 900 µH d'inductance par spire carré.

Ce transformateur permet d'obtenir, pour une variation de 300 à 2 000 Ω de la résistance de la LDR au primaire, une variation de l'inductance de 100 à 400 µH au secondaire, avec une résistance résiduelle de 300 à 400 Ω.

L'inductance variable et la résistance variable peuvent encore être constituées respectivement par un réseau d'inductances et un réseau de résistances, commutées en série et/ou en parallèle au moyen de relais, de manière à obtenir la valeur recherchée.

On peut encore utiliser un condensateur variable en remplacement du condensateur 121, l'inductance variable 123 pouvant alors être remplacée par une inductance de valeur fixe.

Le condensateur variable précité peut être constitué par exemple par un réseau de condensateurs de valeurs fixes, commutés en série et/ou en parallèle de manière à obtenir la valeur souhaitée.

On peut encore utiliser des composants motorisés.

Dans ce cas les intégrateurs 153 et 155 ne sont pas utilisés.

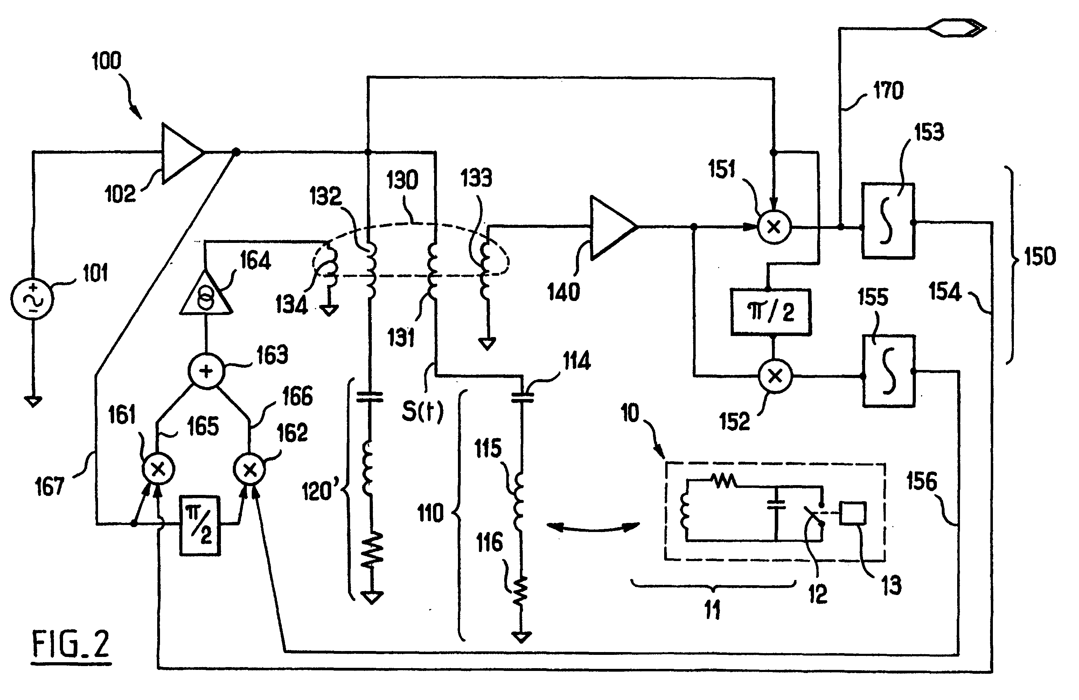

Dans une variante représentée sur la figure 2, on dispose un quatrième enroulement 134 sur le tore 130.

Un bras de compensation 120' remplace le bras 120 précédemment décrit, l'inductance variable 123 et la résistance variable 125 étant remplacées par des composants de valeurs fixes.

Le courant dans l'enroulement 134 est commandé par un amplificateur 164, qui reçoit en entrée un signal délivré par un sommateur 163.

Ce sommateur est alimenté par des signaux 165 et 166.

Le signal 165 est délivré par un multiplicateur 161 qui multiplie le signal d'erreur 154 par le signal d'horloge 167.

Le signal 166 est obtenu par un multiplicateur 162 qui multiplie le signal d'erreur en quadrature 156 par le signal d'horloge, déphasé de π/2.

Le signal 165 correspond au signal d'horloge avec une amplitude proportionnelle du signal d'erreur 154.

Le signal 166 correspond au signal d'horloge en quadrature avec une amplitude proportionnelle au signal d'erreur en quadrature 156.

L'avantage de la réalisation de la figure 2 est de ne pas faire intervenir de composants mécaniques ou opto-électroniques dans le bras de compensation 120'.

Le courant dans l'enroulement 134 annule le flux dans le tore 130 dû aux variations lentes de l'impédance de l'antenne de lecture 110.

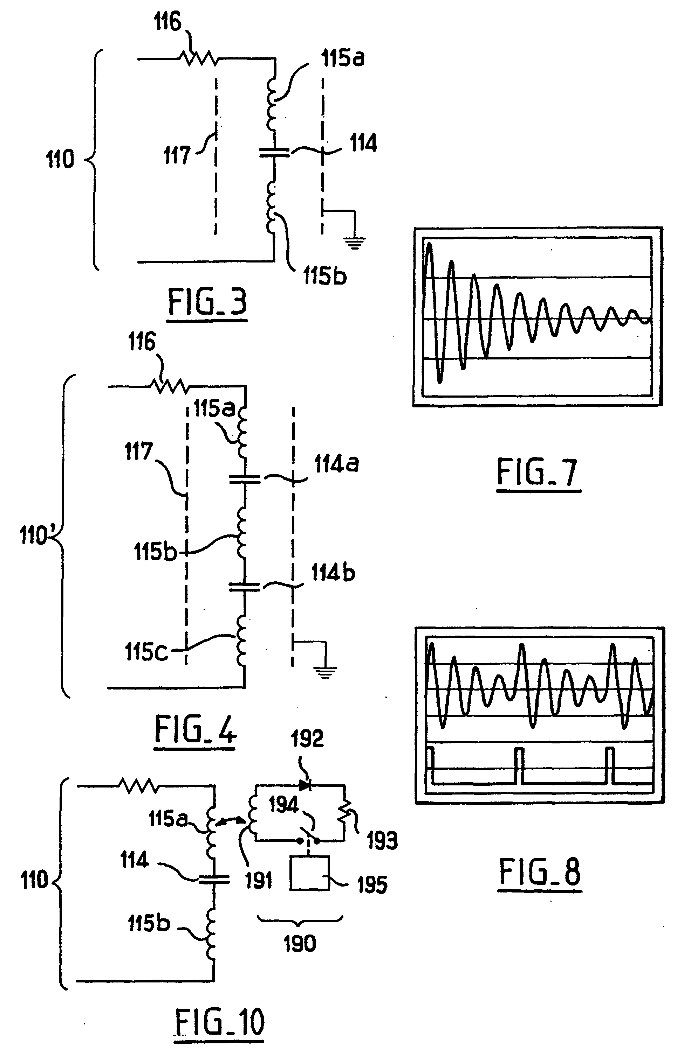

De préférence, comme représenté sur la figure 3, l'antenne de lecture 110 est scindée en deux enroulements 115a et 115b reliés en série par le condensateur d'accord 114.

Les bornes des enroulements soumises aux surtensions coïncident avec celles du condensateur d'accord 114.

Un blindage électrique 117 est placé autour des enroulements 115a et 115b, ce blindage étant ouvert à ses extrémités axiales de manière à permettre le passage des articles portant les transpondeurs.

Les bornes du condensateur d'accord 114 sont aisément positionnées à l'intérieur du blindage 117, et se trouvent ainsi efficacement protégées par ce dernier.

Il en résulte une moindre sensibilité de l'antenne de lecture 110 aux effets de potentiels statiques et à l'humidité ainsi qu'un meilleur vieillissement de ses composants.

Bien entendu, l'antenne de lecture peut être scindée en plus de deux enroulements.

A titre d'exemple, on a représenté sur la figure 4 une antenne 110' comportant trois enroulements reliés en série par deux condensateurs d'accord 114a et 114b.

En vue de diminuer le champ magnétique lointain à l'extérieur de l'antenne, on peut utiliser un premier ensemble d'enroulements et un deuxième ensemble d'enroulements reliés entre eux de manière connue en soi pour constituer une antenne quadripolaire dont le champ magnétique lointain décroît en 1/d⁵.

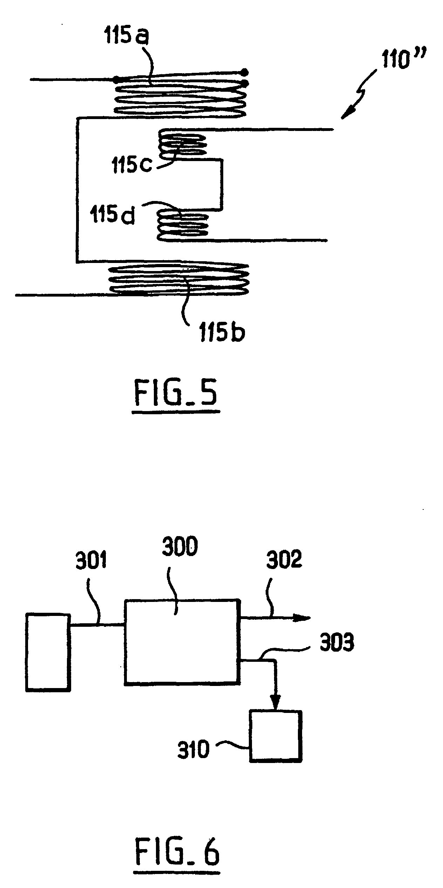

On a représenté, à titre d'exemple et de manière très schématique, une telle antenne 110" sur la figure 5.

L'antenne comporte deux enroulements 115c et 115d reliés en série, placés dans le champ de deux autres enroulements 115a et 115b reliés en série.

Les objets portant les transpondeurs sont placés dans le champ des enroulements 115c et 115d.

On peut diminuer, grâce à l'antenne quadripolaire, l'influence que peut avoir une antenne de lecture sur une antenne de lecture voisine, dans le cas où plusieurs dispositifs de lecture sont utilisés dans une même enceinte.

On notera que le courant envoyé dans l'antenne de lecture 110 est à faible taux d'harmoniques de sorte que l'antenne de lecture 110 peut émettre avec une forte puissance tout en respectant la réglementation.

Pour mettre en évidence une variation de couplage entre l'antenne de lecture et l'antenne de réception, on peut encore utiliser un dispositif de démodulation d'impédance utilisant un coupleur directionnel 300 recevant en entrée 301 le signal destiné à alimenter l'antenne de lecture.

L'antenne de lecture est reliée à la sortie 302.

La sortie 303 est représentative de la puissance réfléchie, non absorbée par l'antenne de lecture.

Lorsque l'antenne de lecture est parfaitement accordée et que les moyens de commutation du transpondeur placé dans le champ de l'antenne sont ouverts, la puissance transmise est totale et le courant sur la sortie 303 du coupleur directionnel 300 est nul.

Par contre, lorsque l'antenne du transpondeur change d'état, l'antenne de lecture cesse d'être parfaitement accordée et le courant sur la sortie 303 n'est plus nul.

Le signal issu de la sortie 303 peut aisément être démodulé de manière synchrone par des moyens de traitement 310 afin de délivrer un signal représentatif de l'information transmise par le transpondeur.

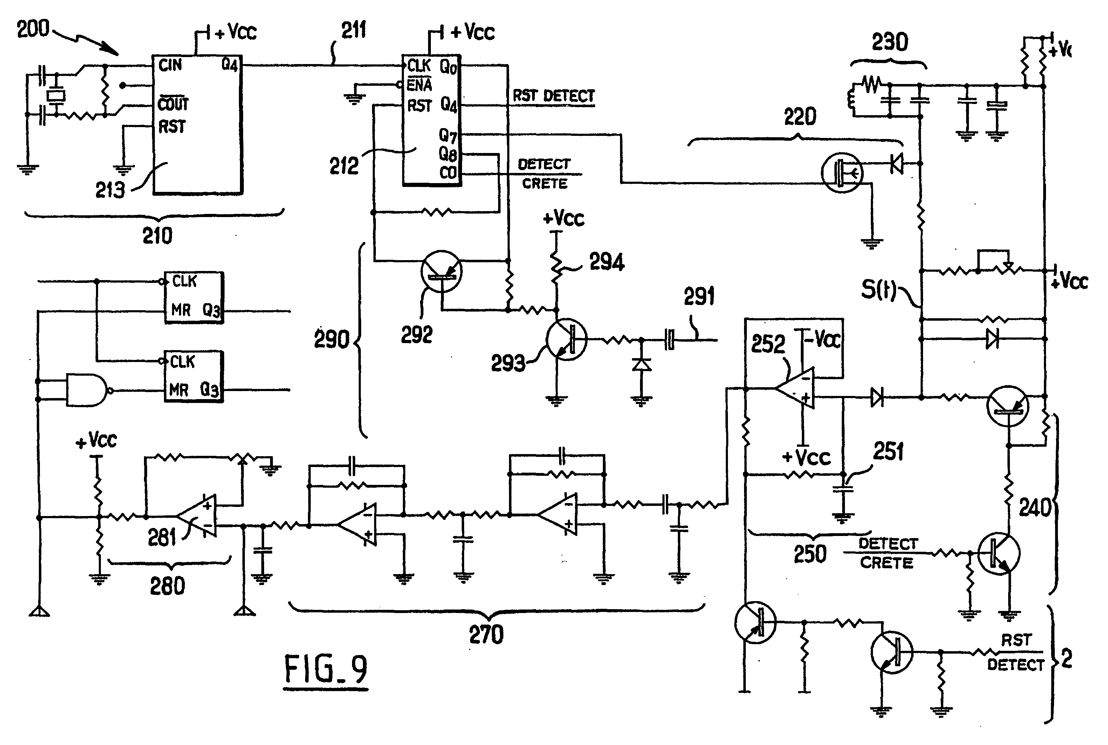

On va maintenant décrire, en référence aux figures 7 à 9, un dispositif de lecture 200, conforme à un deuxième exemple de mise en oeuvre de l'invention.

Ce dispositif de lecture 200 comporte une horloge 210, de conception classique, réalisée par exemple au moyen d'un compteur binaire avec oscillateur 213 du type 74HC4060, qui délivre un signal d'horloge 211 à 268,4 kHz dans l'ensemble décrit.

Le signal d'horloge 211 est envoyé à un compteur décimal 212 du type 74HC4017.

La sortie Q4 de ce compteur décimal fournit un signal impulsionnel RST DETECT dont la fonction sera décrite plus loin.

La sortie Q7 délivre un signal impulsionnel à un étage de puissance 220 relié à l'antenne de lecture 230, laquelle est ici schématisée par un circuit RLC parallèle.

La sortie Q8 est envoyée sur l'entrée RST de remise à zéro.

La sortie CO délivre un signal DETECT CRETE de niveau haut lorsque le compteur 212 balaie les sorties Q0 à Q4 et de niveau bas lorsque le compteur 212 balaie les sorties Q5 à Q8.

On a représenté sur la figure 7 les oscillations libres du signal S(t) de l'antenne de lecture en réponse à une impulsion.

On remarquera que l'amplitude de crête de chaque pseudo-période décroît.

Lorsque l'antenne de lecture 230 est excitée en mode pulsé par l'étage de puissance 220, on obtient le signal S(t) représenté sur la figure 8.

Le dispositif de lecture 200 est agencé pour délivrer un signal représentatif de l'évolution dans le temps de l'amplitude de crête d'une pseudo-période prédéterminée, par exemple la troisième dans l'exemple décrit.

Des moyens d'écrêtage 240 sont prévus pour écrêter le signal S(t) de l'antenne de lecture lorsque la sortie DETECT CRETE du compteur 212 est à l'état haut.

Un détecteur crête 250 permet de garder aux bornes d'un condensateur 251 une tension représentative de l'amplitude de crête de la pseudo-période sélectionnée pour les mesures, c'est-à-dire celle qui suit la fin de l'écrêtage du signal S(t), soit la troisième dans l'exemple décrit.

Le potentiel du condensateur 251 est abaissé à un potentiel prédéterminé juste avant la mesure de l'amplitude de crête de la pseudo-période sélectionnée, grâce à des moyens d'initialisation 260 commandés par le signal RST DETECT.

La tension aux bornes du condensateur 251 se retrouve en sortie de l'amplificateur opérationnel 252 et attaque un ensemble de filtres passe-bande 270 agencés pour éliminer les perturbations haute fréquence.

A la sortie des filtres passe-bande 270, le signal est mis sous forme logique par un comparateur 280 à effet de seuil, utilisant un amplificateur opérationnel 281.

Le signal logique est ensuite décodé au moyen d'un double compteur binaire du type 74HC393 et d'une porte NAND, les compteurs binaires étant attaqués par le signal d'horloge à 67, 1 kHz délivré par la sortie Q6 du compteur binaire 213.

Dans le dispositif de lecture 200, le signal de l'antenne de lecture S(t) n'est pas pollué au moment de la mesure par le bruit des composants électroniques de l'étage de puissance 220, car le transistor de ce dernier est bloqué au moment où s'effectue la mesure et tout se passe comme si l'antenne de lecture 230 était isolée.

L'amplitude de crête de la pseudo-période sur laquelle s'effectue la mesure est mesurée par rapport à un signal de référence qui est ici constant et choisi égal à +VCC, c'est-à-dire à la tension d'alimentation.

Les dispositifs de lecture 100 ou 200 qui viennent d'être décrits sont avantageusement utilisés pour écrire des informations dans les mémoires des transpondeurs par modulation en tout ou rien de l'alimentation de l'antenne de lecture.

Dans le cas du dispositif de lecture 100, cette modulation s'obtient par exemple en commutant le signal envoyé à l'étage de puissance 102.

Dans le cas du dispositif de lecture 200, l'interruption de l'émission de l'antenne de lecture s'obtient grâce à des moyens de commutation 290 comportant deux transistors 292 et 293.

L'envoi d'un signal haut sur la base 291 du transistor 293 a pour conséquence de rendre le transistor 292 passant et d'envoyer la sortie Q0 du compteur 212 sur l'entrée RST de remise à zéro.

Durant l'interruption de l'émission, le courant prélevé sur l'alimentation générale du dispositif de lecture diminue.

Pour éviter que les fluctuations de la tension +VCC ne perturbent le fonctionnement du dispositif de lecture 200, le transistor 293 devient passant lors de la coupure du champ de l'antenne de lecture et débite dans une résistance 294 dont la valeur est choisie de manière à ce que la consommation du dispositif de lecture 200 soit sensiblement la même lorsque l'antenne de lecture émet et lorsque l'émission est interrompue.

Bien entendu, l'invention n'est pas limitée aux exemples de réalisation qui viennent d'être décrits.

Par exemple, pour éviter des oscillations libres de l'antenne de lecture lorsqu'il est nécessaire d'interrompre le champ de celle-ci pour écrire dans la mémoire des transpondeurs, on utilise de préférence un dispositif assurant l'amortissement rapide des oscillations de l'antenne de lecture.

On a représenté sur la figure 10 un dispositif d'amortissement 190 comportant un enroulement 191 couplé avec l'enroulement 115a de l'antenne de lecture 110, des moyens de redressement du courant 192, des moyens de dissipation 193 et des moyens de commutation 194 contrôlés par un circuit de commande 195.

Ce circuit de commande 195 est agencé pour fermer les moyens de commutation 194 immédiatement après que le courant envoyé à l'antenne de lecture 110 ait été interrompu.

De préférence, on assujettit à l'antenne de lecture 110 ou 230 un transpondeur étalon permettant de tester le bon fonctionnement du dispositif de lecture, ce transpondeur pouvant être placé dans un mode silencieux à la fin des phases de test en lui envoyant une information particulière.

Par ailleurs, on peut notamment réaliser le dispositif de lecture de manière à fonctionner à des fréquences plus élevées que 150 kHz, par exemple quelques MHz.

Le bras de compensation 120 peut être remplacé par une antenne comparable à l'antenne de lecture 110, mais dont la zone de lecture est différente.

La puissance électrique dissipée dans l'antenne par effet Joule est par exemple comprise entre 1 et 100w, suivant l'importance du volume de détection

## Revendications

1. Dispositif de lecture (100 ; 200) comportant un étage de puissance (102; 220) et une antenne de lecture (110 ; 230) permettant de générer un champ électromagnétique d'excitation d'au moins un transpondeur (10) situé dans le champ de l'antenne, ce transpondeur comportant une antenne de réception (11) et des moyens de commutation associés (12) lui permettant de modifier l'état de l'antenne de réception (11) et de transmettre ainsi des informations au dispositif de lecture par modification du couplage entre l'antenne de lecture et l'antenne de réception, le dispositif de lecture étant **caractérisé par le fait qu'**il comporte des moyens de détection (130; 250) agencés pour réduire dans le signal de l'antenne de lecture le bruit ou les fluctuations dues aux composants électroniques de l'étage de puissance (102; 220) et générer un signal utile à partir de l'évolution du signal de l'antenne de lecture par rapport à un signal de référence, ce signal de référence étant représentatif du signal de l'antenne de lecture lorsque l'antenne de réception du transpondeur est dans un état prédéterminé, le signal utile étant représentatif des changements d'état de l'antenne de réception.

2. Dispositif selon la revendication 1, **caractérisé par le fait que** le dispositif de lecture comporte des moyens de communication (220) agencés pour alimenter l'antenne de lecture (230) en mode pulsé et **par le fait que** le dispositif de lecture comporte des moyens de traitement agencés pour effectuer une démodulation d'amortissement du signal de l'antenne de lecture après chaque pulse.

3. Dispositif selon la revendication précédente, **caractérisé par le fait que** les moyens de traitement comportent un détecteur crête (250) pour conserver l'amplitude de crête du signal de l'antenne de lecture pendant une pseudo-période prédéterminée.

4. Dispositif selon la revendication précédente, **caractérisé par le fait que** les moyens de traitement comportent des moyens d'écrêtage (260) pour écrêter le signal de l'antenne de lecture pendant une durée prédéterminée précédant la pseudo-période sélectionnée pour la mesure.

5. Dispositif selon la revendication 1, **caractérisé par le fait que** l'antenne de lecture est excitée par un signal à faible taux d'harmoniques, de préférence issu d'un amplificateur à commutation (102) de classe E, et **par le fait que** le dispositif de lecture comporte des moyens de traitement agencés pour effectuer une démodulation d'impédance.

6. Dispositif selon la revendication 1, **caractérisé par le fait que** le signal de référence est obtenu au moyen d'un bras de compensation (120) dont l'impédance est égale, à un facteur près connu, à celle de l'antenne de lecture (110) lorsque l'antenne de réception est dans un premier état prédéterminé.

7. Dispositif selon la revendication précédente, **caractérisé par le fait qu'**il comporte un tore (130) à trois enroulements, dont un premier enroulement (132) en série avec le bras de compensation (120), un deuxième enroulement (131) en série avec l'antenne de lecture (110) et monté en opposition de phase avec le premier enroulement, de telle sorte que le flux dans le tore (130) soit nul quand l'impédance de l'antenne est égale, à un facteur connu près, à celle du bras de compensation, et un troisième enroulement (133) permettant de détecter une variation du flux dans le tore.

8. Dispositif selon la revendication précédente, **caractérisé par le fait que** le bras de compensation (120) comporte des composants variables (123 ; 125) commandés de manière à annuler le flux dans le tore (130) dû aux variations lentes de l'impédance de l'antenne de lecture.

9. Dispositif selon la revendication 7, **caractérisé par le fait que** le bras de compensation (120') comporte des composants de valeurs fixes, **par le fait que** le tore (130) comporte un quatrième enroulement (134) alimenté en courant de manière à annuler le flux dans le tore (130) dû aux variations lentes de l'antenne de lecture.

10. Dispositif selon la revendication 1, **caractérisé par le fait qu'**il comporte un coupleur directionnel (300) agencé de telle sorte qu'une modification du couplage entre l'antenne de lecture et l'antenne de réception donne naissance à un signal utile, lequel est représentatif du désaccord de l'antenne de lecture induit par les changements d'état de l'antenne de réception.

11. Dispositif selon l'une quelconque des revendications précédentes, **caractérisé par le fait que** l'antenne de lecture est scindée en au moins deux enroulements (115a, 115b) reliés en série par un condensateur d'accord (114), ces enroulements étant disposés à l'intérieur d'un blindage (117) ouvert à l'une ou moins de ses extrémités axiales afin de permettre le passage dans l'antenne d'articles munis de transpondeurs.

12. Dispositif selon l'une quelconque des revendications précédentes, **caractérisé par le fait que** l'antenne de lecture (110") comporte un premier ensemble d'enroulements (115c, 115d) disposé à l'intérieur du champ produit par un deuxième ensemble d'enroulements (115a, 115b), ces enroulements étant reliés entre eux de manière à constituer une antenne quadripolaire à l'extérieur de laquelle le champ magnétique lointain décroît en 1/d^{5.}

13. Dispositif selon l'une quelconque des revendications précédentes, **caractérisé par le fait que** la fréquence d'émission de l'antenne de lecture est comprise de préférence entre 100 et 150 kHz et **par le fait que** la fréquence avec laquelle l'antenne de réception est commutée est au moins 16 fois plus faible.

14. Dispositif selon l'une quelconque des revendications précédentes, **caractérisé par le fait que** l'antenne de lecture est agencée pour recevoir un container comportant une pluralité d'articles munis chacun d'un transpondeur.

15. Dispositif selon l'une quelconque des revendications précédentes, **caractérisé par le fait qu'**il comporte un transpondeur étalon assujetti à l'antenne de lecture, ce transpondeur étant actif lors de phases de test et pouvant être placé dans un mode silencieux lorsque lesdites phases de test sont terminées.

16. Dispositif selon l'une quelconque des revendications précédentes, **caractérisé par le fait que** les transpondeurs utilisés sont du type à lecture et écriture et **par le fait que** le dispositif de lecture comporte des moyens de commutation permettant de moduler en tout ou rien l'alimentation de l'antenne de lecture de manière à transmettre des informations aux transpondeurs placés dans le champ de l'antenne.

17. Dispositif selon la revendication précédente, **caractérisé par le fait qu'**il comporte un circuit d'amortissement (190) des oscillations de l'antenne de lecture, comprenant des moyens de commutation pour relier un enroulement (191) placé dans le champ de l'antenne de lecture ou un élément réactif de l'antenne à une charge dissipative (193), lorsqu'il est nécessaire d'amortir rapidement les oscillations de l'antenne.

18. Ensemble de dispositifs tels que définis dans l'une quelconque des revendications précédentes.

19. Ensemble selon la revendication précédente, **caractérisé par le fait que** l'on synchronise les horloges des dispositifs.

20. Ensemble selon l'une des deux revendications précédentes, **caractérisé par le fait que** l'on commande les dispositifs de telle sorte qu'aucun d'eux ne fonctionne en mode d'écriture quand un autre fonctionne en mode de lecture.

## Patentansprüche

1. Lesegerät (100;200) mit einer Leistungsstufe (102;220) und einer Leseantenne (110;230), die erlauben, ein elektromagnetisches Feld zum Erregen mindestens eines im Antennenfeld angeordneten Transponders (10) zu erzeugen, wobei dieser Transponder eine Empfangsantenne (11) und angeschlossene Umschaltungseinrichtungen (12) aufweist, die ihm erlauben, den Zustand der Empfangsantenne (11) zu ändern und auf diese Weise durch Änderung der Kopplung zwischen der Leseantenne und der Empfangsantenne Informationen an das Lesegerät zu senden, wobei das Lesegerät **dadurch gekennzeichnet ist, daß** es Detektionseinrichtungen (130;250) aufweist, die dazu dienen, um im Signal der Leseantenne das Rauschen und die Schwankungen, die von den elektronischen Komponenten der Leistungsstufe (102;220) hervorgerufen werden, zu verringern und aus der Entwicklung des Signals der Leseantenne im Vergleich zu einem Referenzsignal ein Nutzsignal zu erzeugen, wobei dieses Referenzsignal das Signal der Leseantenne darstellt, wenn die Empfangsantenne des Transponders in einem ersten vorgegebenen Zustand ist, wobei das Nutzsignal Änderungen des Zustands der Empfangsantenne darstellt.

2. Gerät nach Anspruch 1, **dadurch gekennzeichnet, daß** das Lesegerät Kommunikationseinrichtungen (220) aufweist, die dazu dienen, die Leseantenne (230) im Pulsmodus zu versorgen, und dadurch, daß das Lesegerät Verarbeitungseinrichtungen aufweist, die dazu dienen, um nach jedem Puls eine Dämpfungsdemodulation des Signals der Leseantenne auszuführen.

3. Gerät nach dem vorstehenden Anspruch, **dadurch gekennzeichnet, daß** die Verarbeitungseinrichtungen einen Scheitelwert-Detektor (250) aufweisen, um die Spitzenamplitude des Signals der Leseantenne während eines vorgegebenen Pseudozeitraums zu halten.

4. Gerät nach dem vorstehenden Anspruch, **dadurch gekennzeichnet, daß** die Verarbeitungseinrichtungen Scheitelwertbegrenzungseinrichtungen (260) aufweisen, um während einer vorgegebenen Dauer, die dem für die Messung ausgewählten Pseudozeitraum vorangeht, die Scheitelwerte des Signals der Leseantenne zu begrenzen.

5. Gerät nach Anspruch 1, **dadurch gekennzeichnet, daß** die Leseantenne von einem Signal eines geringen Oberschwingungsgehalts erregt wird, das vorzugsweise von einem Umschaltungsverstärker (102) der E-Klasse ausgegeben wird, und dadurch, daß das Lesegerät Verarbeitungseinrichtungen aufweist, die dazu dienen, eine Impedanzdemodulation auszuführen.

6. Gerät nach Anspruch 1, **dadurch gekennzeichnet, daß** das Referenzsignal mittels eines Kompensationszweigs (120) gewonnen wird, dessen Impedanz, von einem bekannten Faktor abgesehen, gleich der der Leseantenne (110) ist, wenn die Empfangsantenne in einem vorgegebenen ersten Zustand ist.

7. Gerät nach dem vorstehenden Anspruch, **dadurch gekennzeichnet, daß** es einen Magnetkern (130) mit drei Wicklungen aufweist, wobei eine erste Wicklung (132) in Reihe mit dem Kompensationszweig (120) ist, eine zweite Wicklung (131) in Reihe mit der Leseantenne (110) ist und gegenphasig zur ersten Wicklung angeordnet ist, so daß der Fluß im Magnetkern (130) null ist, wenn die Impedanz der Antenne, von einem bekannten Faktor abgesehen, gleich der des Kompensationszweigs ist, und eine dritte Wicklung (133) erlaubt, eine Änderung des Flusses im Magnetkern zu erfassen.

8. Gerät nach dem vorstehenden Anspruch, **dadurch gekennzeichnet, daß** der Kompensationszweig (120) einstellbare Komponenten (123;125) aufweist, die so gesteuert werden, um den Fluß im Magnetkern (130), der von langsamen Veränderungen der Impedanz der Leseantenne hervorgerufen wird, zu eliminieren.

9. Gerät nach Anspruch 7, **dadurch gekennzeichnet, daß** der Kompensationszweig (120') Komponenten mit festen Werten aufweist, dadurch, daß der Magnetkern (130) eine vierte Wicklung (134) aufweist, die so mit Strom versorgt wird, um den Fluß im Magnetkern (130), der von langsamen Änderungen (*der Impe* *danz)* der Leseantenne hervorgerufen wird, zu eliminieren.

10. Gerät nach Anspruch 1, **dadurch gekennzeichnet, daß** es einen Richtkoppler (300) aufweist, der dazu dient, daß eine Änderung der Kopplung zwischen der Leseantenne und der Empfangsantenne ein Nutzsignal hervorruft, das eine Verstimmung der Leseantenne darstellt, die von den Änderungen des Zustands der Empfangsantenne hervorgerufen wird.

11. Gerät nach einem der vorstehenden Ansprüche, **dadurch gekennzeichnet, daß** die Leseantenne auf mindestens zwei Wicklungen (115a,115b) aufgeteilt ist, die in Reihe mit einem Abstimmungskondensator (114) geschaltet sind, wobei diese Wicklungen im Innern einer Abschirmung (117) angeordnet sind, die an mindestens einem ihrer axialen Enden offen ist, um das Einführen von mit Transpondern versehenen Gegenständen in die Antenne zu erlauben.

12. Gerät nach einem der vorstehenden Ansprüche, **dadurch gekennzeichnet, daß** die Leseantenne (110'') eine erste Anordnung von Wicklungen (115c,115d) aufweist, die innerhalb eines Feldes angeordnet ist, das von einer zweiten Anordnung von Wicklungen (115a,115b) erzeugt wird, wobei diese Wicklungen so miteinander verbunden sind, um eine Quadrapolantenne zu bilden, außerhalb welcher das Fernmagnetfeld mit 1/d⁵ abnimmt.

13. Gerät nach einem der vorstehenden Ansprüche, **dadurch gekennzeichnet, daß** die Sendefrequenz der Leseantenne vorzugsweise zwischen 100 und 150 kHz liegt, und dadurch, daß die Frequenz, mit welcher die Empfangsantenne umgeschaltet wird, mindestens 16fach geringer ist.

14. Gerät nach einem der vorstehenden Ansprüche, **dadurch gekennzeichnet, daß** die Leseantenne eingerichtet ist, um ein Gehäuse aufzunehmen, das mehrere Gegenstände aufweist, die jeweils mit einem Transponder versehen sind.

15. Gerät nach einem der vorstehenden Ansprüche, **dadurch gekennzeichnet, daß** es einen der Leseantenne unterworfenen Eich-Transponder aufweist, wobei dieser Transponder in Testphasen aktiv ist und in einen Ruhemodus versetzt werden kann, wenn diese Testphasen beendet sind.

16. Gerät nach einem der vorstehenden Ansprüche, **dadurch gekennzeichnet, daß** die verwendeten Transponder vom Lese- und Schreibtyp sind, und dadurch, daß das Lesegerät Umschaltungseinrichtungen aufweist, die erlauben, die Versorgung der Leseantenne auf eine "Alles oder nichts"- Weise zu modulieren, um Informationen an die im Antennenfeld angeordneten Transponder zu senden.

17. Gerät nach dem vorstehenden Anspruch, **dadurch gekennzeichnet, daß** es eine Schaltung (190) zur Dämpfung von Schwingungen der Leseantenne aufweist, die Umschaltungseinrichtungen aufweist, um eine im Feld der Leseantenne angeordnete Wicklung (191) oder ein reaktives Element der Antenne mit einer dissipativen Last (193) zu verbinden, wenn es erforderlich ist, die Schwingungen der Antenne schnell zu dämpfen.

18. Anordnung von Geräten wie in einem der vorstehenden Ansprüche definiert.

19. Anordnung nach dem vorstehenden Anspruch, **dadurch gekennzeichnet, daß** die Taktgeber der Geräte synchronisiert sind.

20. Anordnung nach einem der zwei vorstehenden Ansprüche, **dadurch gekennzeichnet, daß** die Geräte so gesteuert werden, daß keines von ihnen im Schreibmodus arbeitet, wenn eine anderes im Lesemodus arbeitet.

## Claims

1. A read device (100; 200) including a power stage (102; 220) and a read antenna (110; 230) making it possible to generate an electromagnetic field for excitation of at least one transponder (10) situated in the field of the antenna, this transponder including a receiving antenna (11) and associated changeover-switching means (12) allowing it to modify the state of the receiving antenna (11) and thus to transmit information to the read device, by modification of the coupling between the read antenna and the receiving antenna, the read device being **characterized in that** it includes detection means (130; 250) which are configured to reduce the noise or the fluctuations, in the signal from the read antenna, which are due to the electronic components of the power stage (110; 220) and to generate a useful signal from the change in the signal from the read antenna by comparison with a reference signal, this reference signal being representative of the signal from the read antenna when the receiving antenna of the transponder is in a predetermined state, the useful signal being representative of the changes of state of the receiving antenna.

2. The device as claimed in claim 1, **characterized in that** the read device includes communications means (220) which are configured to feed the read antenna (230) in pulsed mode and **in that** the read device includes processing means which are configured to perform damping demodulation of the signal from the read antenna after each pulse.

3. The device as claimed in the preceding claim, **characterized in that** the processing means include a peak detector (250) in order to preserve the peak amplitude of the signal from the read antenna over a predetermined pseudo-period.

4. The device as claimed in the preceding claim, **characterized in that** the processing means include peak-limiting means (260) for peak-limiting the signal from the read antenna over a predetermined period preceding the pseudo-period selected for the measurement.

5. The device as claimed in claim 1, **characterized in that** the read antenna is excited by a signal with a low harmonic content, preferably output by a class-E switching amplifier (102), and **in that** the read device includes processing means configured to perform impedance demodulation.

6. The device as claimed in claim 1, **characterized in that** the reference signal is obtained by means of a compensation arm (120) the impedance of which is equal, to within a known factor, to that of the read antenna (110) when the receiving antenna is in a first predetermined state.

7. The device as claimed in the preceding claim, **characterized in that** it includes a torus (130) with three coils, including a first coil (132) linked in series with the compensation arm (120), a second coil (131) linked in series with the read antenna (110) and mounted in phase opposition with the first coil, in such a way that the flux in the torus (130) is zero when the impedance of the antenna is equal, to within a known factor, to that of the compensation arm, and a third coil (133) making it possible to detect a flux variation in the torus.

8. The device as claimed in the preceding claim, **characterized in that** the compensation arm (120) includes variable components (123; 125) which are controlled in such a way as to cancel out the flux in the torus (130) due to the slow variations in the impedance of the read antenna.

9. The device as claimed in claim 7, **characterized in that** the compensation arm (120') includes components of fixed values, and **in that** the torus (130) includes a fourth coil (134) supplied with current in such a way as to cancel out the flux in the torus (130) due to the slow variations of the read antenna.

10. The device as claimed in claim 1, **characterized in that** it includes a directional coupler (300) configured in such a way that a modification of the coupling between the read antenna and the receiving antenna gives rise to a useful signal which is representative of the de-tuning of the read antenna induced by the changes of state of the receiving antenna.

11. The device as claimed in any one of the preceding claims, **characterized in that** the read antenna is split into at least two coils (115a, 115b) linked in series by a tuning capacitor (114), these coils being arranged within a screening (117) open at at least one of its axial extremities, so as to allow articles equipped with transponders to pass into the antenna.

12. The device as claimed in any one of the preceding claims, **characterized in that** the read antenna (110'') includes a first set of coils (115c, 115d) arranged within the field produced by a second set of coils (115a, 115b), these coils being linked together in such a way as to constitute a four-pole antenna, outside which the far magnetic field decreases as 1/d⁵.

13. The device as claimed in any one of the preceding claims, **characterized in that** the transmission frequency of the read antenna preferably lies between 100 and 150 kHz and **in that** the frequency with which the receiving antenna is switched is at least 16 times lower.

14. The device as claimed in any one of the preceding claims, **characterized in that** the read antenna is configured to receive a container including a plurality of articles each equipped with a transponder.

15. The device as claimed in any one of the preceding claims, **characterized in that** it includes a gauge transponder fastened to the read antenna, this transponder being active during test phases and possibly being placed in a silent mode when said test phases are terminated.

16. The device as claimed in any one of the preceding claims, **characterized in that** the transponders used are of the read and the write type, and **in that** the read device includes changeover-switching means making it possible to modulate the feed to the read antenna in all-or-nothing mode, so as to transmit information to the transponders placed in the field of the antenna.

17. The device as claimed in the preceding claim, **characterized in that** it includes a circuit (190) for damping the oscillations of the read antenna, comprising changeover-switching means for linking a coil (191) placed in the field of the read antenna or a reactive element of the antenna to a dissipative load (193), when it is necessary to damp the oscillations of the antenna rapidly.

18. A set of devices as defined in any one of the preceding claims.

19. A set as claimed in the preceding claim, **characterized in that** the clocks of the devices are synchronized.

20. A set as claimed in one of the two preceding claims, **characterized in that** the devices are driven in such a way that none of them operates in write mode when another one is operating in read mode.
